# EUROPEAN PATENT APPLICATION

(11) **EP 1 909 347 A1**
(43) Date of publication of application: **09.04.2008**
(21) Application number: 06781623.1
(22) Date of filing: 19.07.2006
(51) Int. Cl.: H01M 8/02, C08J 5/04, H01B 1/06, H01B 13/00, H01M 8/10

(54) **COMPOSITE POROUS MEMBRANE, METHOD FOR PRODUCTION THEREOF, SOLID POLYMER ELECTROLYTE MEMBRANE, AND FUEL CELL**

(30) Priority: 19.07.2005 JP 2005208168
(71) Applicant: TOYOTA JIDOSHA KABUSHIKI KAISHA, Toyota-shi, Aichi-ken, 471-8571 (JP)
(72) Inventor: KATAYAMA, Yukihisa, , Toyota-shi, Aichi; 4718571 (JP)
(74) Representative: Kuhnen, Rainer-Andreas
(86) International application number: PCT/JP2006/314711
(87) International publication number: WO 2007/011054

(57) **Abstract**

It is intended to provide a composite porous membrane comprising a fibrous filler-containing polymer film or sheet, **characterized by** having a large number of pores with an exposed fibrous filler formed by irradiation with an ultra-short pulse laser with a pulse width of 10⁻⁹ seconds or less, and to provide a polymer electrolyte membrane having the pores that are filled with a polymer electrolyte. According to the present invention, an inorganic-organic or organic-organic composite porous membrane can be obtained, which can be prepared as a thin membrane and is highly durable with high strength and a reduced cross-leak of fuel gas. This composite porous membrane can be used as a solid polymer electrolyte membrane to obtain a fuel cell improved in output voltage and electric current density.

## Description

### Technical Field

The present invention relates to a variety of functional membranes, particularly, an inorganic-organic or organic-organic composite porous membrane most suitable for a solid polymer electrolyte used in a solid polymer fuel cell, a water electrolysis apparatus, etc., a method for producing the same, and a fuel cell comprising the composite porous membrane. Particularly, the present invention relates to a solid polymer electrolyte membrane that exhibits, when used in a fuel cell, excellent durability without breakages attributed to repetitive changes in operational conditions, and a method for producing the same.

### Background Art

Solid polymer electrolyte fuel cells have a structure comprising a solid polymer electrolyte membrane as an electrolyte and electrodes connected to both sides of this membrane.

The polymer solid electrolyte membrane must have low membrane resistance in itself, when used as a fuel cell. Therefore, it is desired that its membrane thickness should be as thin as possible. However, a solid polymer electrolyte membrane with too a thin membrane thickness had such problems that: pinholes occur during membrane production; the membrane is tom or broken during electrode formation; and a short circuit is easily made between the electrodes. Moreover, the polymer solid electrolyte membrane used for a fuel cell is always used in a wet state. Therefore, such a solid polymer electrolyte membrane tends to have reliability problems such as pressure resistance or cross-leaks during differential pressure operation resulting from the swelling, deformation, and the like of the polymer membrane attributed to wetting.

Thus, JP Patent Publication (Kokai) No. 9-194609A (1997) is intended to provide an ion-exchange membrane that has no breakage attributed to repetitive changes in the water content of an ion-exchange resin and resists pinholes by virtue of the mutual tight contact between the ion-exchange resin and a porous membrane of a fluorocarbon resin or the like. This document discloses a method for producing an ion-exchange membrane, comprising: impregnating at least pores of a porous membrane of a fluorocarbon resin or the like produced by drawing with a polymer dissolved in a solvent; attaching the polymer to the porous membrane by drying; and introducing an ion-exchange group thereinto.

On the other hand, an ultra-short pulse laser with a pulse width of 10⁻⁹ seconds or less has received attention as a laser beam suitable to laser micromachining. Particularly, a femtosecond (fs: 10⁻¹² sec.) pulse laser beam, when used in the machining of a variety of materials such as metal and transparent materials, is characterized by hardly producing thermal and chemical breakages (deformation and alteration) in the neighborhood of a laser beam-irradiated site, totally unlike conventional machining with a CO₂ or YAG laser.

In the conventional laser machining, most of light energy irradiated on a material to be machined is converted to heat energy, and machining through melting, decomposition, and scattering proceeds by this heat. By contrast, when an ultra-short pulse laser is used, energy is concentrated onto a material to be machined in an exceedingly short time. Therefore, nanoplasma, nanoshock, breakdown, lattice strain, and shock waves occur at an ultrahigh speed, and machining through abrasion (scattering) proceeds before heat generation. Thus, machining is probably induced only at the irradiated site and finely achieved without breakages in the neighborhood thereof.

Moreover, the machining of a transparent material using an ultra-short pulse laser beam such as a femtosecond pulse laser proceeds by multiphoton absorption and can therefore three-dimensionally remote-machine only the internal region of the material surface without damages. Furthermore, this machining utilizes non-linear phenomena such as multiphoton absorption and therefore produces resolving power of machining that exceeds the diffraction limit of an irradiation light wavelength, in spite of use of light.

Thus, the laser machining using an ultra-short pulse laser beam such as a femtosecond pulse laser is totally different in machining mechanism from the conventional laser machining. The machining using an ultra-short pulse laser has much higher resolving power and can restrict a machined region to the internal region of a material to be machined. Therefore, this machining can achieve ultra-micromachining technique of submicron or less resolutions far beyond the bounds of common sense of the conventional laser machining.

Thus, JP Patent Publication (Kokai) No. 2004-283871A is intended to produce a plastic structure having very small pores in a polymer material. This document discloses the production of a plastic structure having through-holes and/or sink holes of 200 µm or smaller in the minimum size or width by irradiating a plastic material with an ultra-short pulse laser.

Alternatively, JP Patent Publication (Kokai) No. 2004-79266A described below is intended to apply, to a polymer electrolyte membrane for a fuel cell, an electrolyte membrane for a direct methanol fuel cell that generates an electric power through electrochemical reaction by supplying methanol as fuel. Specifically, this document discloses an electrolyte membrane for a direct methanol fuel cell produced by irradiating an electrolyte membrane comprising a thin polymer membrane with an ultra-short pulse laser to form plural uniform fine holes and filling the fine holes with an electrolyte material.

### Disclosure of the Invention

In the method disclosed in JP Patent Publication (Kokai) No. 9-194609A (1997), a polymer is hydrophilic, whereas a drawn porous membrane is a hydrophobic. These components are rendered conformable to each other by a solvent. However, a membrane described therein is not made into a highly durable, composite membrane. Thus, there is concern that the electrolyte and PTFE are separated in use.

Alternatively, in the methods disclosed in JP Patent Publication (Kokai) Nos. 2004-283871A and 2004-79266A, a machinable pore size has a lower limit in pore formation using only laser machining, even if an ultra-short laser is used. Therefore, it is difficult to form pores of submicron (1 µm or smaller) in size. Furthermore, these machining methods form only through-holes and therefore required chemical treatment such as surface treatment for immobilizing an electrolyte material on a film.

The present invention has been made in consideration of the problems of the conventional techniques. An object of the present invention is to provide an inorganic-organic or organic-organic composite porous membrane, which can be prepared as a thin membrane and is highly durable with high strength. Another object of the present invention is to provide a fuel cell improved in output voltage and electric current density by using this inorganic-organic or organic-organic composite porous membrane as a solid polymer electrolyte membrane.

The present inventor has found that the objects have been attained by mixing an inorganic material that is not scattered by an ultra-short pulse laser into a polymer material for punching pores by use of the ultra-short pulse laser, and has consequently completed the present invention.

Specifically, a first aspect of the present invention is a composite porous membrane comprising a fibrous filler-containing polymer film or sheet, characterized by having a large number of pores with an exposed fibrous filler formed by irradiation with an ultra-short pulse laser with a pulse width of 10⁻⁹ seconds or less. The composite porous membrane of the present invention can be used as a variety of functional membranes by taking advantage of a large number of pores carried thereby.

In the present invention, the fibrous filler may be an inorganic fibrous filler or may be an organic fibrous filler differing in cohesive energy from the polymer material as a substrate, for example, an aramid fiber.

In the inorganic-organic or organic-organic composite porous membrane of the present invention, the polymer material within the pores is scattered by the irradiation energy of the ultra-short pulse laser, whereas the fiber contained in the polymer material remains within the pores without being scattered because of its large cohesive energy. Therefore; pores having a desired shape can be punched, while the initial strength of the fiber-reinforced plastic can also be maintained. In this context, it is preferred that the pores should penetrate the membrane in light of a variety of applications of the composite porous membrane of the present invention, which will be described later.

The composite porous membrane of the present invention can be used in a variety of applications. For using the composite porous membrane as an electrolyte membrane, particularly, an electrolyte membrane for a fuel cell, the pores with an exposed fibrous filler must be filled with a polymer electrolyte. The pores on the order of submicron are filled with a polymer electrolyte. Therefore, the composite porous membrane has the high adhesion between the polymer film or sheet substrate and the polymer electrolyte and exhibits high durability in a variety of applications.

In the present invention, a variety of inorganic fibers known in the field of polymer compositions are used as the inorganic fibrous filler. Among them, a glass fiber is most general and is preferably exemplified:

In the present invention, a variety of polymer materials known in the art are used as a polymer material serving as the polymer film or sheet substrate. Among them, preferable examples thereof include, but not limited to, polytetrafluoroethylene (PTFE) or a tetrafluoroethylene copolymer comprising 10% by mole or less of a copolymerization component, and polysiloxane having at least one or more group(s) selected from methyl, phenyl, hydrogen, and hydroxyl groups as a substituent.

For using the inorganic-organic or organic-organic composite porous membrane of the present invention as an ion-exchange functional membrane, it is preferred that the polymer electrolyte with which the pores are filled should have a sulfonic acid group.

The ultra-short pulse laser used in the present invention is an ultra-short pulse laser with a pulse width of 10⁻⁹ seconds or less. Specific examples thereof include a nanosecond, picosecond, or femtosecond pulse laser.

It is preferred that the fibrous filler should have a fiber length that is larger than the pore size of the pores and a fiber thickness that is 1/20 or smaller of the pore size of the pores, in light of the point of the present invention that the polymer material is scattered by the irradiation energy of the ultra-short pulse laser, whereas the inorganic fiber contained in the polymer material remains within the pores without being scattered and does not inhibit the movement of ions. More specifically, it is preferred that the fibrous filler should have a fiber length of 1 µm to 10 µm and an aspect ratio (average length-average diameter) of 10 or more.

A second aspect of the present invention is a method for producing the composite porous membrane, comprising
(1) preparing a fibrous filler-containing polymer film or sheet, and
(2) irradiating the fibrous filler-containing polymer film or sheet with an ultra-short pulse laser with a pulse width of 10⁻⁹ seconds or less to form pores with an exposed fibrous filler in the fibrous filler-containing polymer film or sheet.

For using the inorganic-organic or organic-organic composite porous membrane of the present invention as an electrolyte membrane, it is preferred that the method should further comprise (3) filling the pores with an exposed fibrous filler with an electrolyte-forming monomer and subsequently polymerizing the electrolyte-forming monomer. In this context, the electrolyte-forming monomer may be mixed with a cross-linking agent. This can cause cross-linking reaction during polymerization so as to impart strength, solvent resistance, heat resistance, etc., to the electrolyte portions within the pores. Moreover, it is preferred that to fill the pores with the electrolyte-forming monomer and optionally with the cross-linking agent, ultrasonication and/or defoaming treatment should be performed for sufficiently infiltrating the electrolyte-forming monomer and the optional cross-linking agent into the pores. For sufficiently infiltrating the cross-linking agent into the pores, it is preferred that a solvent with a high wettability (low polarity) should be used for infiltration. It is preferred that the solvent should be selected appropriately from solvents with an SP value of 10 or less such as carbon tetrachloride, chloroform, benzene, toluene, diethyl ether, acetone, and tetrahydrofuran.

A method for polymerizing the electrolyte-forming monomer within the pores is not particularly limited. Preferable examples thereof include one or more method(s) selected from photopolymerization, thermal polymerization, and catalyst-initiated polymerization. Among them, photopolymerization is preferable in terms of operability, etc.

For using the inorganic-organic or organic-organic composite porous membrane of the present invention as an electrolyte membrane, it is also preferred that the method should comprise (4) filling the pores with an exposed fibrous filler with a polymer electrolyte, instead of the step (3). Polymer electrolytes known in the art can be used as the polymer electrolyte with which the pores are filled. Among them, a preferable polymer electrolyte is represented by the following general formula (2): 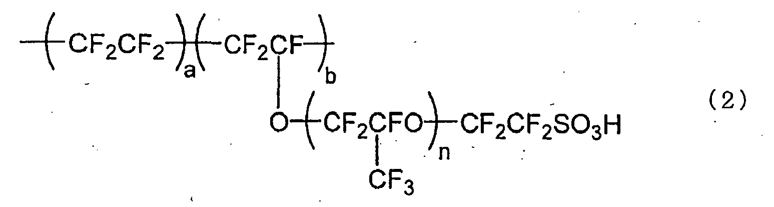 wherein the ratio of the moiety a to the moiety b is a:b=0:1 to 9:1, and n represents 0, 1, or 2.

To fill the pores with an exposed fibrous filler with the polymer electrolyte, the polymer electrolyte is dissolved without a solvent or in a solvent for filling. For example, a polymer electrolyte solution is used, and the solvent can be evaporated later. It is preferred that the solvent used should have a high boiling point and a low SP value. Examples thereof include DMSO, CC14, and CF2C12. Moreover, for filling the pores with an exposed fibrous filler with the polymer electrolyte, it is effective to perform heating and/or pressurization.

In the present invention, specific examples of the ultra-short pulse laser include a nanosecond, picosecond, or femtosecond pulse laser, as described above.

The fibrous filler has a fiber length that is larger than the pore size of the pores and has a fiber length of 1 µm to 10 µm and an aspect ratio (average length÷average diameter) of 10 or more, as described above. Preferable specific examples of the fibrous filler include a glass fiber, as described above.

To irradiate the film or sheet with the ultra-short pulse laser with a pulse width of 10⁻⁹ seconds or less, a holographic exposure method may be used for regularly punching a large number of pores and is therefore preferable as the method for producing a composite porous membrane according to the present invention.

A third aspect of the present invention is a functional membrane comprising the composite porous membrane.

A fourth aspect of the present invention is a polymer electrolyte membrane comprising the-coinposite porous membrane.

A fifth aspect of the present invention is a fuel cell comprising the solid polymer electrolyte membrane.

According to the present invention, the thickness of the solid polymer electrolyte membrane can be rendered thin. Moreover, the polymer film or sheet substrate is used as a support of an electrolyte membrane and can therefore reinforce the strength of the electrolyte membrane. Thus, a fuel cell equipped with the solid polymer electrolyte membrane according to the present invention is highly durable and can have a reduced cross-leak of fuel gas and improved current-voltage characteristics.

The present invention produces the effects that: (1) a polymer film or sheet substrate having desired physical properties can be used as a reinforcing material; (2) pores with controllable and uniform pore sizes can be formed; (3) chemical treatment such as surface treatment is unnecessary for immobilizing an electrolyte material on the film or sheet; (4) the polymer film or sheet substrate is well impregnated with the polymer electrolyte; and (5) the composite membrane even with a small pore size has high reinforcing effects and therefore can keep mechanical durability. In addition, the present invention produces the effects that: (6) the polymerization of the electrolyte monomer after impregnation directly produces an aqueous or non-aqueous electrolyte without a solvent; (7) the polymer electrolyte itself has a sulfonic acid group. Therefore, a procedure for introducing an ion-exchange group into a side chain by hydrolysis can be omitted; and (8) the punched pores have a small pore size. Therefore, the polymer film or sheet substrate has high affinity for the polymer electrolyte and is therefore excellent in strength as a polymer electrolyte membrane.

Moreover, according to the present invention, the polymer film or sheet substrate is used as a support of an electrolyte membrane and can therefore reinforce the strength of the electrolyte membrane. The thickness of a solid polymer electrolyte membrane can be controlled by the thickness of a polymer film or sheet substrate. Therefore, the strength of the electrolyte membrane of the present invention can be reinforced as compared with conventional electrolyte membranes comprising- a perfluorocarbon sulfonic acid resin made into a membrane form. As a result, the electrolyte membrane of the present invention can be used even in a small thickness as compared with the conventional electrolytes comprising a perfluorocarbon sulfonic acid resin made into a membrane form.

### Brief Description of the Drawing

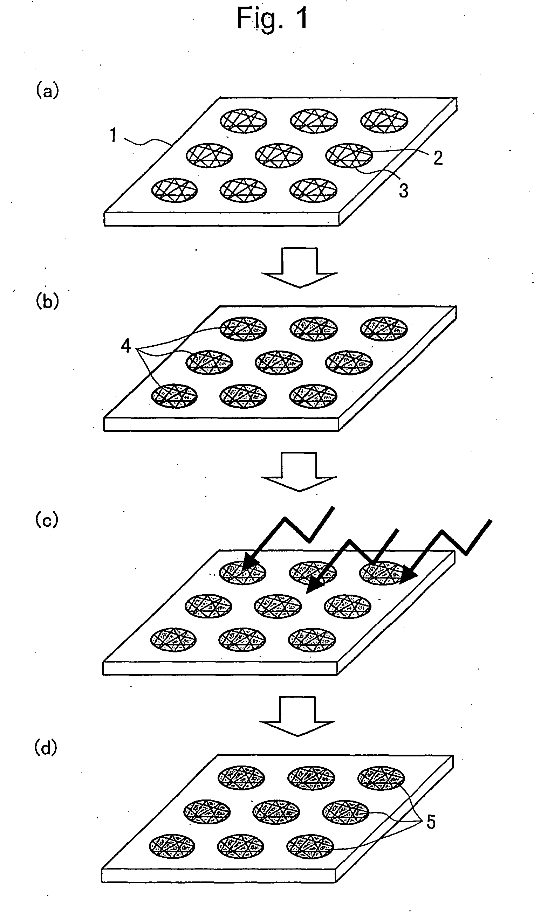

Figure 1 shows one example of production steps of an electrolyte membrane using an inorganic-organic or organic-organic composite porous membrane of the present invention, wherein reference numeral 1 denotes a fibrous filler-containing polymer film or sheet, reference numeral 2 denotes pores punched with an ultra-short pulse laser, reference numeral 3 denotes an exposed fibrous filler, reference numeral 4 denotes an electrolyte-forming monomer, and reference numeral 5 denotes a polymer electrolyte.

### Best Mode for Carrying Out the Invention

Figure 1 shows one example of production steps of an electrolyte membrane using a composite porous membrane of the present invention. A fibrous filler-containing polymer film or sheet 1 is irradiated with an ultra-short pulse laser with a pulse width of 10⁻⁹ seconds or less to form pores 2 with an exposed fibrous filler 3 in the fibrous filler-containing polymer film or sheet (Figure 1 (a)). To use the composite porous membrane as an electrolyte membrane, the pores 2 with the exposed fibrous filler 3 are filled with an electrolyte-forming monomer 4 (Figure 1(b)). Subsequently, the electrolyte-forming monomer is photopolymerized (Figure 1(c)). The pores 2 are filled with a polymer electrolyte 5 (Figure 1(d)).

Specific examples of an ultra-short pulse laser with a pulse width of 10⁻⁹ seconds or less that can be used in the present invention include: a pulse laser with a pulse width of 10⁻⁹ seconds or less obtained by regeneration/amplification from a laser whose medium is a titanium-sapphire crystal or from a dye laser; and a pulse laser with a pulse width of 10⁻⁹ seconds or less having a harmonic wave of an excimer or YAG (e.g., Nd-YAG) laser. Particularly, a pulse laser on the order of femtosecond with a pulse width of 10⁻¹² to 10⁻¹⁵ seconds (femtosecond pulse laser), can be used preferably, which is obtained by regeneration/amplification from a laser whose medium is a titanium-sapphire crystal or from a dye laser. Of course, the pulse width of the ultra-short pulse laser is not particularly limited as long as it is 10⁻⁹ seconds or less. For example, the pulse width is on the order of picosecond from 10⁻⁹ seconds to 10⁻¹² seconds or on the order of femtosecond from 10⁻¹² seconds to 10⁻¹⁵ seconds and is usually approximately 100 femtoseconds (10⁻¹³ seconds). The use of such an ultra-short pulse laser such as a pulse laser with a pulse width of 10⁻⁹ seconds or less obtained by regeneration/amplification from a laser whose medium is a titanium-sapphire crystal or from a dye laser, or a pulse laser with a pulse width of 10⁻⁹ seconds or less having a harmonic wave of an excimer or YAG (e.g., Nd-YAG) laser, can produce high pulse energy and therefore achieve laser machining using multiphoton absorption processes. These lasers can permit micromachining in a width narrower than the wavelength by the power thereof. Thus, the laser machining using the ultra-short pulse laser through multiphoton absorption processes can form very small through-holes of 200 µm or smaller in the minimum size or width. The shape of the cross section is not limited to circular or elliptic shape and may be any shape such as a line, curve, or bending line for a longer major axis.

In the present invention, the wavelength of the ultra-short pulse laser is not particularly limited. The wavelength may be a wavelength longer than the absorption wavelength of a resin component in a fibrous filler-containing polymer film or sheet substrate because of the multiphoton absorption processes used, and can be selected appropriately according to the type or absorption wavelength of the resin component in the fibrous filler-containing polymer film or sheet substrate. Specifically, the wavelength of the ultra-short pulse laser may be, for example, a wavelength in the range of ultraviolet to near infrared and can thus be selected appropriately from the range of 200 nm to 1000 nm. In this context, it is preferred that the wavelength of the ultra-short pulse laser should be a wavelength that serves as a harmonic (second-harmonic, third-harmonic, etc.) wave of the absorption wavelength (peak wavelength of absorption) of the resin component in the fibrous filler-containing polymer film or sheet substrate.

Moreover, the repetition rate of the ultra-short pulse laser ranges from 1 Hz to 100 MHz and is usually approximately 10 Hz to 500 kHz.

Energy irradiated per unit volume in the internal region of the fibrous filler-containing polymer film or sheet substrate can be determined appropriately according to the irradiation energy of the ultra-short pulse laser, the numerical aperture (light gathering) of an objective lens used in irradiation on the polymer film or sheet substrate, an irradiation position or the depth of focus on a plastic substrate to be machined, the movement speed of a laser focus, etc.

In the present invention, the average output power or irradiation energy of the ultra-short pulse laser is not particularly limited, and can be selected appropriately according to the size, shape, etc. of the pores of interest (particularly, very small through-holes) and can be selected from, for example, 10000 mW or less, preferably the range of approximately 5 to 500 mW, more preferably the range of approximately 10 to 300 mW.

Moreover, the spot size of irradiation of the ultra-short pulse laser is not particularly limited. The spot size can be selected appropriately according to the size or shape of the pores of interest, the size, numeric aperture, or magnification of the lens, etc. and can be selected from, for example, the range of approximately 0.1 to 10 µm.

Not only a polymer material having a single chemical structure (including copolymers) but also a polymer alloy or blend comprising plural polymer materials having different chemical structures can be used as a polymer material used as the polymer film or sheet substrate in the present invention before containing a fibrous filler. Alternatively, the polymer film or sheet substrate may be a complex containing other materials such as inorganic compounds or metals in a dispersed state or may be a lamination having a two-layer or more layered structure containing layers comprising different plastics or other materials. For example, when a polymer film or sheet substrate comprising carbon black dispersed therein is used for imparting conductivity to the polymer film or sheet, this polymer film or sheet substrate exhibits enhanced laser light absorption efficiency and also exhibits easily machinable effects.

Specific examples of the polymer film or sheet include, but not limited to, resins (e.g., thermoplastic resins) including: methacrylate-based resins such as polymethyl methacrylate (PMMA); styrene-based resins such as polystyrene, acrylonitrile-styrene copolymers (AS resins), and acrylonitrile-butadiene-styrene copolymers (ABS resins); polyamide; polyimide (PI); polyether imide (PEI); polyamide-imide; polyesterimide; polycarbonate (PC); polyacetal; polyarylene ether such as polyphenylene ether (PPO); polyphenylene sulfide (PPS); polyarylate; polyaryl; polysulfone; polyether sulfone (PES); polyurethanes; polyester-based resins such as polyethylene terephthalate (PET); polyether ketones such as polyether ether ketone (PEEK) or polyether ketone ketone (PEKK); polyacrylic acid esters such as butyl polyacrylate and ethyl polyacrylate; polyvinyl esters such as polybutoxymethylene; polysiloxanes; polysulfides; polyphosphazenes; polytriazines; polycarboranes; polynorbornene; epoxy-based resins; polyvinyl alcohol; polyvinylpyrrolidone; polydienes such as polyisoprene and polybutadiene; polyalkenes such as polyisobutylene; fluorine-based resins such as vinylidene fluoride-based resins, hexafluoropropylene-based resins, hexafluoroacetone-based resins, and polytetrafluoroethylene resins; polyolefin resins such as polyethylene, polypropylene, and ethylene-propylene copolymers.

These polymer film or sheet substrates can be selected appropriately according to the applications of a composite porous membrane having pores. For example, fluorine-based or olefin-based resins can be used preferably in applications such as a filter or separator in consideration of chemical stability, etc.

The thickness of the polymer film or sheet substrate is not particularly limited. The thickness can be selected appropriately according to the applications of the composite porous membrane having pores and may be, for example, 0.1 µm or larger (e.g., 0.1 µm to 10 mm). When the substrate is a plastic film, laser machining using multiphoton absorption processes produces a plastic film having pores. In the present invention, laser machining can be performed with excellent precision for a substrate to be machined, even if the substrate to be machined is a polymer film (i.e., even if its thickness is thin). When the substrate to be machined is a polymer film, its thickness may be, for example, 0.1 to 500 µm, preferably 1 to 300 µm, more preferably 10 to 150 µm.

In the present invention, a variety of inorganic fibers known in the field of polymer compositions are used as the inorganic fibrous filler. Examples thereof include glass fibers, glass wool, carbon fibers, fibrous magnesium whisker, magnesium nitrate- whisker, silicon carbide whisker, silicon nitride whisker, graphite, potassium titanate whisker, fibrous aluminum oxide, acicular titanium oxide, wollastonite, and ceramic fibers. Among them, a glass fiber is most general.

A variety of electrolyte-forming monomers known in the art can be used as an electrolyte-forming monomer used in the present invention. Preferable examples thereof include, but not limited to, compounds having a strong acid group such as a sulfonic acid group in the chemical structure, that is, vinylsulfonic acid, vinylphosphonic acid, allylsulfonic acid, allylphosphonic acid, styrenesulfonic acid, and styrenephosphonic acid.

Moreover, the present invention encompasses not only the monomers themselves having an ionic functional group but also monomers having a group that is converted to an ionic functional group through reaction at a post-process. For example, in the present invention, the porous membrane is produced by impregnating the polymer film or sheet substrate with the electrolyte-forming monomer, which is in turn polymerized to convert a sulfonyl halide [-SO₂X¹], sulfonic acid ester [-SO₃R¹], or halogen [-X₂] group within the molecular chain to a sulfonic acid [-SO₃H] group. Alternatively, the porous membrane is produced by using chlorosulfonic acid to introduce a sulfonic acid group into, for example, a phenyl, ketone, or ether group present in the electrolyte-forming monomer unit present in the polymer film or sheet substrate.

In the present invention, typical examples of the electrolyte-forming monomer include the following monomers shown in (1) to (6):
(1) one or more monomer(s) selected from the group consisting of monomers having a sulfonyl halide group, that is, CF₂=CF(SO₂X¹) (wherein X¹ represents a halogen group -F or - Cl; hereinafter, the same holds true), CH₂=CF(SO₂X¹), and CF₂=CF(OCH₂(CF₂)ₘSO₂X¹) (wherein m represents any of 1 to 4; hereinafter, the same holds true);
(2) one or more monomer(s) selected from the group consisting of monomers having a sulfonic acid ester group, that is, CF₂=CF(SO₃R') (wherein R¹ represents an alkyl group -CH₃, -C₂H₅, or -C(CH₃)₃; hereinafter, the same holds true), CH₂=CF(SO₃R¹), and . CF₂=CF(OCH₂(CF₂)ₘSO₃R¹);
(3) one or more monomer(s) selected from the group consisting of CF₂=CF(O(CH₂)ₘX²) (wherein X² represents a halogen group -Br or -Cl; hereinafter, the same holds true) and CF₂=CF(OCH₂(CF₂)ₘX²);
(4) one or more monomer(s) selected from the group consisting of acrylic monomers, that is, CF₂=CR²(COOR³) (wherein R² represents -CH₃ or -F, and R³ represents -H, -CH₃, -C₂H₅, or - C(CH₃)₃; hereinafter, the same holds true) and CH₂=CR²(COOR³);
(5) one or more monomer(s) selected from the group consisting of styrene or styrene derivative monomers, that is, 2,4-dimethylstyrene, vinyltoluene, and 4-tert-butylstyrene; and
(6) one or more monomer(s) selected from the group consisting of acetylnaphthylene, vinyl ketone CH₂=CH(COR⁴) (wherein R⁴ represents -CH₃, -C₂H₅, or a phenyl group (-C⁶H₅)), and vinyl ether CH₂=CH(OR⁵) (wherein R⁵ represents -CₙH₂ₙ₊₁ (n=any of 1 to 5), -CH(CH₃)₂, - C(CH₃)₃, or a phenyl group).

Specific examples of a cross-linking agent optionally used for the electrolyte-forming monomer in the present invention include divinylbenzene, triallyl cyanurate, triallyl isocyanurate, 3,5-bis(trifluorovinyl)phenol, and 3,5-bis(trifluorovinyloxy)phenol. One or more of these cross-linking agents is added for cross-linking and polymerization in an amount of 30% by mole or less with respect to the total monomer amount.

The inorganic-organic or organic-organic composite porous membrane having pores of the present invention has precisely controlled pores in the surface or internal region and can therefore effectively exert a variety of functions by taking advantage of the precisely controlled and formed pores. Particularly, when the composite porous membrane having pores has very small through-holes, this composite porous membrane can exert, for example, filter, membrane, separator, atomization, gas diffusion, nozzle, and flow channel adjustment functions.

Examples of specific applications in which the inorganic-organic or organic-organic composite porous membrane having pores of the present invention can be used include: micromachines, microsensors, biological instruments, microreactor chips, and implantable artificial organs, which exploit their spacer functions forming precise spaces, flow channels, etc.; and a variety of functional members such as microfilters, microfiltration membranes (micromembranes), separators for a cell (e.g., separators for a cell utilized in a variety of cells such as nickel hydride batteries and lithium-ion cells), members for a fuel cell (e.g., a variety of members used in a fuel cell, such as gas diffusion, current collection, moisture permeable, and moisture retention layers), micronozzles (e.g., micronozzles for printers, for injection, for spraying, and for gaps), distributors, gas diffusion layers, and microchannels.

When the inorganic-organic or organic-organic composite porous membrane having pores of the present invention is used in a fuel cell, the thickness of the solid polymer electrolyte membrane can be rendered thin. Moreover, the polymer film or sheet substrate is used as a support of an electrolyte membrane and can therefore reinforce the strength of the electrolyte membrane. Thus, the fuel cell equipped with the solid polymer electrolyte membrane according to the present invention is highly durable and can have a reduced cross-leak of fuel gas and improved current-voltage characteristics.

Hereinafter, Example of the present invention will be shown.

### Example

A highly functional composite electrolyte membrane for a fuel cell comprising a porous support was produced according to steps shown in Figure 1 by membrane machining using an ultra-short pulse laser. In a specific production method, a polymer film containing a fibrous material (preferably, not having conductivity) with a fiber length larger than a pore size to be machined was irradiated with an ultra-short pulse laser to form a porous membrane having a structure as shown in Figure 1.

It is preferred that the fibrous material used should have a bulk resistivity of 10⁻⁵ to 10⁻² Ω/cm. However, insulation properties can be improved by mixing with a film material. Therefore, materials that can be used are not limited to this material. It is preferred that the fibrous material should have a fiber length of 1 µm to 10 µm and an aspect ratio (average length÷average diameter) of 10 or more, from the viewpoint of the machining of the film and the maintenance of conductivity.

This polyether ether ketone (PEEK) film mixed with the filler was irradiated for 0.1 seconds with a femtosecond pulse with a pulse width of 120 fs and an output power of 0.1 W formed through a predetermined optical system from a sapphire laser to form plural pores (through-holes) of 8 µm in diameter. The material may be, in addition to PEEK, engineering plastics such as PPS, PEI, PPSU, PI, and PES or may be general-purpose plastics such as PE, PP, and PET.

Moreover, to fill these pores with an electrolyte, an electrolyte monomer (ATBS (acrylamide-t-butyl sulfonic acid) manufactured by Aldrich was used) solution was prepared according to composition described below. Specifically, trace amounts of a cross-linking agent and a surfactant were added to a solution having the ratio of pure water to the electrolyte monomer=95:5 by weight. The film was immersed into this solution and then subjected to ultrasonic cleaning and defoaming treatment for infiltration. Then, the film was irradiated with UV (0.3 W/cm²) with a wavelength of 365 nm for 3 minutes to perform polymerization within the pores of the film. As a result, the pores were filled with the electrolyte material to form a composite electrolyte material.

### Industrial Applicability

The present invention produces such effects that: (1) a polymer film or sheet substrate having desired physical properties can be used as a reinforcing material; (2) pores with controllable and uniform pore sizes can be formed; and (3) chemical treatment such as surface treatment is unnecessary for immobilizing an electrolyte material on the film or sheet. Therefore, an inorganic-organic or organic-organic composite porous membrane of the present invention can be utilized as a functional membrane in a variety of applications.

Moreover, the present invention can improve the durability of a composite porous membrane, particularly, a solid polymer electrolyte membrane. A fuel cell equipped with the solid polymer electrolyte membrane according to the present invention is highly durable and can have a reduced cross-leak of fuel gas and improved current-voltage characteristics. This enhances the durability and power generation performance of the fuel cell and contributes to practical and widespread use thereof.

## Claims

1. A composite porous membrane comprising a fibrous filler-containing polymer film or sheet, **characterized by** having a large number of pores with an exposed fibrous filler formed by irradiation with an ultra-short pulse laser with a pulse width of 10⁻⁹ seconds or less.

2. The composite porous membrane according to claim 1; **characterized in that** the fibrous filler is an inorganic fibrous filler.

3. The composite porous membrane according to claim 1, **characterized in that** the fibrous filler is an organic fibrous filler differing in cohesive energy from the fibrous filler-containing polymer film or sheet as a substrate.

4. The composite porous membrane according to claim 2, **characterized in that** the inorganic fibrous filler is a glass fiber.

5. The composite porous membrane according to claim 3, **characterized in that** the organic fibrous filler is an aramid fiber.

6. The composite porous membrane according to any of claims 1 to 5, **characterized in that** the pores with an exposed fibrous filler are filled with a polymer electrolyte.

7. The composite porous membrane according to any of claims 1 to 6, **characterized in that** the polymer film or sheet is made of polytetrafluoroethylene (PTFE) represented by the following general formula (1): 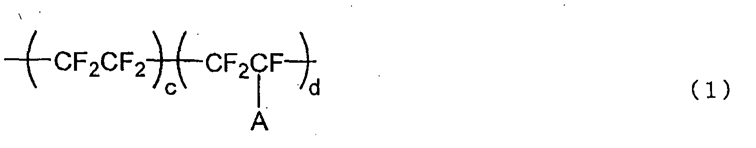 wherein A represents one or more member(s) selected from the formula described below,
A= - CF₃
- OCF₃
- OCF₂CF₂CF₃
and the ratio of the moiety c to the moiety d is c:d=1:0 to 9:1, or a tetrafluoroethylene copolymer comprising 10% by mole or less of a copolymerization component.

8. The composite porous membrane according to any of claims 1 to 6, **characterized in that** the polymer film or sheet is made of polysiloxane, and an organic group in the polysiloxane is at least one or more group(s) selected from methyl, phenyl, hydrogen, and hydroxyl groups.

9. The composite porous membrane according to any of claims 6 to 8, **characterized in that** the polymer electrolyte has a sulfonic acid group.

10. The composite porous membrane according to any of claims 1 to 9, **characterized in that** the ultra-short pulse laser is a nanosecond, picosecond, or femtosecond pulse laser.

11. The composite porous membrane according to any of claims 1 to 10, **characterized in that** the fibrous filler has a fiber length that is larger than the pore size of the pores and a fiber thickness that is 1/20 or smaller of the pore size of the pores.

12. The composite porous membrane according to any of claims 1 to 11, **characterized in that** the fibrous filler has a fiber length of 1 µm to 10 µm and an aspect ratio (average length÷average diameter) of 10 or more.

13. A method for producing a composite porous membrane, **characterized by** comprising irradiating a fibrous filler-containing polymer film or sheet with an ultra-short pulse laser with a pulse width of 10⁻⁹ seconds or less to form pores with an exposed fibrous filler in the fibrous filler-containing polymer film or sheet.

14. The method for producing a composite porous membrane according to claim 13, **characterized in that** the fibrous filler is an inorganic fibrous filler.

15. The method for producing a composite porous membrane according to claim 13, **characterized in that** the fibrous filler is an organic fibrous filler differing in cohesive energy from the fibrous filler-containing polymer film or sheet as a substrate.

16. The method for producing a composite porous membrane according to claim 14, **characterized in that** the inorganic fibrous filler is a glass fiber.

17. The method for producing a composite porous membrane according to claim 15, **characterized in that** the organic fibrous filler is an aramid fiber.

18. The method for producing a composite porous membrane according to any of claims 13 to 17, **characterized by** further comprising filling the pores with an exposed fibrous filler with an electrolyte-forming monomer and subsequently polymerizing the electrolyte-forming monomer.

19. The method for producing a composite porous membrane according to claim 18, **characterized in that** the electrolyte-forming monomer is mixed with a cross-linking agent.

20. The method for producing a composite porous membrane according to claim 18 or 19, **characterized in that** to fill the pores with the electrolyte-forming monomer and optionally with the cross-linking agent, ultrasonication and/or defoaming treatment is performed for infiltration.

21. The method for producing a composite porous membrane according to any of claims 18 to 20, **characterized in that** the polymerization of the electrolyte-forming monomer is one or more method(s) selected from photopolymerization, thermal polymerization, and catalyst-initiated polymerization.

22. The method for producing a composite porous membrane according to claim 18, **characterized by** further comprising filling the pores with an exposed fibrous filler with a polymer electrolyte.

23. The method for producing a composite porous membrane according to claim 22, **characterized in that** the polymer electrolyte is represented by the following general formula (2): 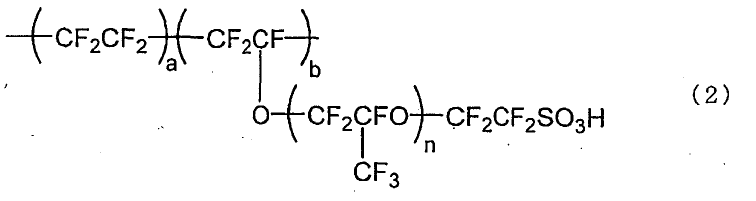 wherein the ratio of the moiety a to the moiety b is a:b=0:1 to 9:1; and n represents 0, 1, or 2.

24. The method for producing a composite porous membrane according to claim 22 or 23, **characterized in that** to fill the pores with an exposed fibrous filler with the polymer electrolyte, a polymer electrolyte solution is used, and the solvent is evaporated later.

25. The method for producing a composite porous membrane according to any of claims 22 to 24, **characterized in that** to fill the pores with an exposed inorganic fibrous filler with the polymer electrolyte, heating and/or pressurization is performed.

26. The method for producing a composite porous membrane according to any of claims 13 to 25, **characterized in that** the ultra-short pulse laser is a nanosecond, picosecond, or femtosecond pulse laser.

27. The method for producing a composite porous membrane according to any of claims 13 to 26, **characterized in that** the fibrous filler has a fiber length that is larger than the pore size of the pores and a fiber thickness that is 1/20 or smaller of the pore size of the pores.

28. The method for producing a composite porous membrane according to any of claims 13 to 27, **characterized in that** the fibrous filler has a fiber length of 1 µm to 10 µm and an aspect ratio (average length÷average diameter) of 10 or more.

29. The method for producing a composite porous membrane according to any of claims 13 to 28, **characterized in that** to irradiate the film or sheet with the ultra-short pulse laser with a pulse width of 10⁻⁹ seconds or less, a holographic exposure method is used for regularly punching a large number of pores.

30. A functional membrane comprising a composite porous membrane according to any of claims 1 to 12.

31. A polymer electrolyte membrane comprising a composite porous membrane according to any of claims 6 to 12.

32. A fuel cell comprising a solid polymer electrolyte membrane according to claim 31.
